# DEMANDE DE BREVET EUROPEEN

(11) **EP 1 101 977 A2**
(43) Date de publication de la demande: **23.05.2001**
(21) Numéro de dépôt: 00403209.0
(22) Date de dépôt: 17.11.2000
(51) Int. Cl.: F16H 47/04

(54) **Transmission à dérivation de puissance**

(30) Priorité: 22.11.1999 FR 9914652; 22.11.1999 FR 9914653; 22.11.1999 FR 9914654
(71) Demandeur: Renault, 92100 Boulogne Billancourt (FR)
(72) Inventeur: Butot, Jean Luc, 78920 Ecquevilly (FR); Cheze, Frédéric, 78370 Plaisir (FR); Kargar, Keyvan, 78230 Le Pecq (FR)

(57) **Abrégé**

L'invention propose une transmission (10) à dérivation de puissance pour un véhicule automobile comportant, d'amont en aval, un arbre d'entrée (12), un premier (16) et un second (18) trains épicycloïdaux, et un arbre (20) de sortie accouplé à un pont (24), du type dans lequel des premiers et seconds éléments des trains (16, 18) épicycloïdaux sont liés en rotation les uns aux autres, aux arbres d'entrée (12) et de sortie (20), à un premier arbre (40) d'un convertisseur (42) hydrostatique commandé pouvant faire varier la raison du premier train (16) épicycloïdal, et sont liés sélectivement à un second arbre (44) du convertisseur (42) pouvant faire varier la raison du second train (18) épicycloïdal par crabotage avec l'un ou l'autre de deux des éléments du second train (18) épicycloïdal, caractérisée en ce qu'elle comporte des moyens mécaniques indépendants de blocage des premier (40) et second (44) arbres du convertisseur (42) pour éviter les pertes hydrauliques dans ledit convertisseur (42).

## Description

L'invention concerne une transmission à dérivation de puissance, notamment pour un véhicule automobile.

L'invention concerne plus particulièrement une transmission à dérivation de puissance, notamment pour un véhicule automobile, du type qui comporte, d'amont en aval, un arbre d'entrée qui est accouplé à un moteur du véhicule, un premier et un second trains épicycloïdaux, et un arbre de sortie qui est accouplé à un pont pour entraîner au moins une roue du véhicule, du type dans lequel des premiers et seconds éléments des premier et second trains épicycloïdaux, notamment des premier et second planétaires, porte-satellites et couronnes sont liés en rotation les uns aux autres, à l'arbre d'entrée, à l'arbre de sortie, à un premier arbre d'un convertisseur hydrostatique commandé susceptible de faire varier la raison du premier train épicycloïdal, et sont liés sélectivement à un second arbre du convertisseur hydrostatique susceptible de faire varier la raison du second train épicycloïdal par crabotage avec l'un ou l'autre de deux des seconds éléments du second train épicycloïdal.

Le document FR-2.520.827 décrit et représente un exemple d'une telle transmission.

Cette transmission comporte un premier et un second trains épicycloïdaux dont les planétaires sont tous deux liés en rotation à l'arbre d'entrée de la transmission, et dont respectivement les porte-satellites sont tous deux liés en rotation à l'arbre de sortie de la transmission. Un premier organe hydraulique d'un convertisseur hydrostatique est lié à une couronne du premier train épicycloïdal, et un deuxième organe hydraulique dudit convertisseur hydrostatique est susceptible d'être sélectivement lié en rotation à une couronne du second train épicycloïdal ou bien à un pignon engrenant avec l'arbre de sortie de la transmission.

Dans ce document, les organes hydrauliques du convertisseur hydrostatique sont, de manière connue, des moteurs-pompes à pistons axiaux dont les débits peuvent être régulés en réglant les inclinaisons respectives de plateaux sur lesquels sont en appui les pistons axiaux de chacun des organes hydrauliques, de façon à permettre leur fonctionnement à vitesses et à couples régulés.

De la sorte, la transmission est susceptible de déterminer deux modes de fonctionnement, notamment un mode de fonctionnement dit "à sortie couplée" pour lequel le deuxième organe hydraulique du convertisseur hydrostatique est lié en rotation au un pignon engrenant avec l'arbre de sortie de la transmission, et un mode de fonctionnement dit "à deux points d'adaptation" pour lequel le deuxième organe hydraulique du convertisseur hydrostatique est lié en rotation à la couronne du second train épicycloïdal.

Le mode de fonctionnement dit "à sortie couplée" permet d'obtenir au moins un point de fonctionnement, dit "point d'adaptation", du convertisseur hydrostatique pour lequel le premier organe est à vitesse nulle pour bloquer la couronne du premier train épicycloïdal, et pour lequel le second organe hydraulique est à cylindrée nulle, et le mode de fonctionnement dit "à deux points d'adaptation" permet d'obtenir au moins deux points de fonctionnement, dits d'adaptation, pour lesquels un des organes hydrauliques est à vitesse nulle pour bloquer la couronne du premier train épicycloïdal ou bien la couronne du second train épicycloïdal et pour lequel l'autre organe hydraulique est à vitesse nulle.

Ainsi pour chaque point d'adaptation, lorsqu'un organe hydraulique est à vitesse nulle, l'autre organe est à cylindrée nulle de façon à interrompre la circulation de fluide hydraulique entre les deux organes.

Pour ces deux modes de fonctionnement, le blocage de l'une ou de l'autre des couronnes du premier train épicycloïdal ou du second train épicycloïdal permet notamment d'établir des rapports de démultiplication élevés de la transmission.

L'inconvénient d'une telle transmission est que, même lorsque l'un des organes hydrauliques est à vitesse nulle et l'autre à cylindrée nulle, une partie de l'énergie mécanique qui chemine dans la transmission est absorbée en pure perte par le variateur hydrostatique, notamment sous forme de pertes fluides et de frottements internes dans l'organe hydraulique qui est à cylindrée nulle.

Cette perte d'énergie mécanique pénalise fortement le rendement d'une telle transmission.

Pour remédier à cet inconvénient, l'invention propose une transmission du type décrit précédemment supprimant cette perte.

Dans ce but, l'invention propose une transmission du type décrit précédemment, caractérisée en ce qu'elle comporte des moyens mécaniques indépendants de blocage des premier et second arbres du convertisseur hydrostatique pour éviter les pertes d'énergie hydraulique dans ledit convertisseur hydrostatique.

Selon d'autres caractéristiques de l'invention:
- le premier planétaire et la seconde couronne sont liés à l'arbre d'entrée, les premier et second porte-satellites sont liés à l'arbre de sortie et sont susceptibles d'être liés en rotation au second arbre du convertisseur hydrostatique, la première couronne est liée au premier arbre du convertisseur hydrostatique, et le second planétaire est susceptible d'être lié en rotation au second arbre du convertisseur hydrostatique,
- les moyens mécaniques indépendants de blocage comportent un premier frein qui agit sur la première couronne et un second frein qui agit sur l'arbre de sortie du convertisseur hydrostatique,
- le premier frein est un frein à bande et en ce que le second frein est un frein à disque,
- la transmission comporte des moyens de crabotage double qui permettent de lier sélectivement en rotation le second planétaire au second arbre du convertisseur hydrostatique ou bien de lier l'arbre de sortie au second arbre du convertisseur hydrostatique,
- le convertisseur hydrostatique comporte des premier et second organes hydrauliques, qui sont associés respectivement aux premier et second arbres du convertisseur, qui sont reliés hydrauliquement l'un à l'autre, dont chacun est susceptible de fonctionner en pompe ou bien en moteur hydraulique avec une cylindrée variable commandée, pour transmettre un mouvement de rotation, de couple et de vitesse de valeurs déterminées, de l'un des premier et second organes hydrauliques à l'autre des premier et second organes hydrauliques selon des couple et vitesse de valeurs régulées,
- la transmission comporte des moyens de commande qui sont susceptibles d'établir un mode de fonctionnement dit à sortie couplée, dans lequel les moyens de crabotage double lient en rotation l'arbre de sortie au second arbre du convertisseur hydrostatique, et qui permet au moins un point de fonctionnement, dit d'adaptation, du convertisseur hydrostatique pour lequel le premier organe est à vitesse nulle pour bloquer la première couronne, et pour lequel le second organe hydraulique est à cylindrée nulle, et un mode de fonctionnement dit à deux points d'adaptation, dans lequel les moyens de crabotage double lient en rotation le second planétaire au second arbre du convertisseur hydrostatique, et qui permet au moins deux points de fonctionnement, dits d'adaptation, pour lesquels un des organes hydrauliques est à vitesse nulle pour bloquer la première couronne ou bien le second planétaire et pour lequel l'autre organe hydraulique est à cylindrée nulle,
- les moyens de commande activent le premier frein, dans le mode de fonctionnement à sortie couplée ou dans le mode de fonctionnement à deux points d'adaptation, lorsque le convertisseur hydrostatique est au point d'adaptation pour lequel le premier organe hydraulique est à vitesse nulle, et les moyens de commande activent le second frein, dans le mode de fonctionnement à deux points d'adaptation, lorsque le convertisseur hydrostatique est au point d'adaptation pour lequel le second organe hydraulique est à vitesse nulle,
- les premier et second organes hydrauliques du convertisseur hydrostatique sont des moteurs-pompes qui comportent chacun un arbre dont est solidaire un plateau inclinable de façon commandée sur lequel sont en appui des pistons axiaux, rappelés élastiquement à l'encontre du plateau, et qui coulissent dans une chambre suivant une course qui est déterminée par l'inclinaison du plateau, la variation de la course des pistons dans leurs chambre déterminant la cylindrée variable de chaque moteur-pompe.

L'invention concerne également un organe hydraulique, notamment pour un convertisseur hydrostatique de transmission à dérivation de puissance de véhicule automobile du type évoqué ci-dessus.

Cet organe hydraulique est susceptible de fonctionner en moteur-pompe hydraulique et qui comporte un arbre et un plateau inclinable de façon commandée avec lequel des pistons axiaux sont en contact de façon à provoquer, lors de la rotation de l'arbre, leur coulissement dans un corps intérieur de l'organe suivant une course qui est déterminée par l'inclinaison du plateau, la variation de la course des pistons dans leurs chambres déterminant la cylindrée variable du moteur-pompe.

On connaît de nombreux exemples d'organes hydrauliques de ce type. Ils sont utilisés dans de nombreux dispositifs requérant la transformation d'une puissance mécanique, transmise par l'intermédiaire de la rotation de l'arbre, en une puissance hydraulique, transmise par le coulissement des pistons dans leurs chambres.

Ces organes trouvent notamment une application courante dans la fabrication de convertisseurs hydrostatiques, qui peuvent par exemple être utilisés dans des transmissions à dérivation de puissance pour véhicules automobiles, telle que décrite ci-dessus.

Dans une telle transmission, comme dans la plupart des nombreux dispositifs utilisant des convertisseurs hydrostatiques du type décrit précédemment, l'encombrement des organes hydrauliques utilisés est un critère déterminant de conception.

Il existe plusieurs types d'organes hydrauliques.

Selon une première conception connue, II peut tout d'abord s'agir de moteurs-pompes pour lesquelles le plateau est entraîné en rotation par l'arbre et pour lesquels un corps extérieur de l'organe, qui porte un vérin à double effet, est aussi entraîné en rotation par l'arbre de façon à maintenir le plateau fixe par rapport à l'arbre pour une course déterminée dudit vérin.

Un corps intérieur de l'organe, qui porte les pistons axiaux, est monté fixe par rapport à un carter de l'organe hydraulique de façon que la rotation du plateau provoque un mouvement alternatif des pistons dans le corps intérieur.

Les pistons sont par exemple rappelés élastiquement à l'encontre du plateau et le contact entre les extrémités des pistons et le plateau est un contact de type ponctuel, ou bien les pistons sont libres de coulisser dans le corps intérieur de l'organe et leurs extrémités sont maintenues dans une gorge circulaire du plateau par un palier dit "hydrodynamique".

Selon une deuxième conception connue, il peut s'agir de moteurs-pompes pour lesquelles le plateau est entraîné en rotation par l'arbre tout en étant articulé par un pivot par rapport au carter de l'organe, notamment par l'intermédiaire de patins de glissement qui sont montés à rotation sur un carter de l'organe. Le corps extérieur du plateau, qui porte un vérin à double effet, est fixe, l'extrémité du vérin glissant dans une gorge circulaire du plateau par l'intermédiaire d'un palier hydrodynamique. Le corps intérieur, qui porte les pistons axiaux, est entraîné en rotation par l'arbre et les extrémités des pistons axiaux sont par exemple liées au plateau par l'intermédiaire de rotules, de sorte que l'inclinaison globalement constante du plateau par rapport au carter provoque un mouvement alternatif des pistons dans le corps intérieur.

De tels moteurs-pompes comportent généralement un seul vérin hydraulique axial à double effet pour la commande du plateau inclinable avec lequel les pistons axiaux sont en contact.

Ce vérin hydraulique axial unique est source de nombreux inconvénients.

En effet, selon les deux conceptions connues, le vérin à double effet, qui doit fonctionner sous une pression d'environ 20 bars, est particulièrement encombrant, ce qui implique de disposer le vérin à double effet suivant un diamètre nettement supérieur au diamètre suivant lequel sont agencés les pistons, et elles rendent ce type d'organe hydraulique impropre à une utilisation sur un véhicule de tourisme léger.

De plus, selon la première conception connue dans laquelle le corps extérieur est entraîné en rotation, le vérin à double effet forme un balourd qui pose des problèmes considérables, puisque sa masse varie en fonction de la quantité d'huile qu'il contient, et puisque son inertie varie en fonction de la position axiale de son piston.

Pour remédier à ces inconvénients, l'invention propose un organe hydraulique comportant des moyens de commande de l'inclinaison du plateau qui sont peu encombrants et qui sont équilibrés dynamiquement.

Dans ce but, l'invention propose un organe hydraulique du type décrit précédemment, caractérisé en ce que le plateau de l'organe hydraulique est commandé en inclinaison autour d'un axe perpendiculaire à la direction axiale de l'arbre de l'organe hydraulique par au moins deux vérins doubles, à simple effet, de direction axiale, qui sont diamétralement opposés et qui sont portés par un corps extérieur de l'organe hydraulique.

Selon d'autres caractéristiques de l'invention:
- chaque vérin double comporte un premier et un second vérins coaxiaux concentriques dont les pistons sont mobiles l'un par rapport à l'autre avec un premier piston qui agit sur le plateau et un second piston qui agit sur le premier piston,
- le premier vérin comporte une première chambre cylindrique annulaire arrière, qui est formée dans le corps extérieur, dans laquelle coulisse le premier piston tubulaire, dont l'extrémité libre avant coopère avec le plateau,
- le second vérin comporte une seconde chambre cylindrique arrière qui est formée dans le corps extérieur, qui est coaxiale à la première chambre arrière, et dans laquelle coulisse un second piston dont l'extrémité libre avant coopère avec une face arrière interne du premier piston,
- chacune des première et seconde chambres comporte un orifice associé d'alimentation,
- le corps extérieur comporte un alésage interne dans lequel est monté, avec jeu radial, une chemise tubulaire fixe dont le trou interne délimite radialement la seconde chambre arrière, et la première chambre tubulaire arrière est délimitée radialement entre la paroi de l'alésage interne du corps extérieur et la paroi externe de la chemise tubulaire,
- une cloison transversale de l'alésage interne délimite axialement vers l'arrière la première chambre arrière,
- l'alésage interne est formé dans l'épaisseur du corps tubulaire extérieur,
- la première chambre de pression est susceptible d'être alimentée en huile à la pression haute de refoulement de l'organe hydraulique par l'intermédiaire de son orifice d'alimentation d'huile associé, et la deuxième chambre de pression est susceptible d'être alimentée en huile à la pression basse d'alimentation de l'organe hydraulique par l'intermédiaire de son orifice d'alimentation d'huile associé,
- la face arrière interne du premier piston du premier vérin est conformée suivant une tronc de cône pour former une partie d'appui pour l'extrémité libre avant tronconique complémentaire du second piston du second vérin,
- le plateau est articulé par rapport à l'arbre de l'organe hydraulique par l'intermédiaire d'une rotule,
- le plateau est de surcroît articulé en rotation par rapport à un carter fixe de l'organe hydraulique autour d'un axe perpendiculaire au plan médian commun des deux vérins doubles, notamment par l'intermédiaire de deux arbres opposés dont une extrémité de chacun est liée en rotation au carter et dont l'autre extrémité comporte des moyens de guidage d'une collerette périphérique du plateau,
- le corps extérieur de l'organe hydraulique est fixe par rapport au carter, l'extrémité libre avant du premier piston du vérin coulissant dans une gorge circulaire du plateau, et le corps intérieur de l'organe hydraulique est lié en rotation à l'arbre de l'organe hydraulique, des extrémités libres avant des pistons axiaux étant liées au plateau par des rotules,
- une tête sphérique de l'extrémité libre avant du premier piston du premier vérin est reçue de manière étanche dans une gorge circulaire du plateau qui est alimentée en huile sous pression par un conduit traversant la tête sphérique du premier piston pour former un palier hydrodynamique permettant le glissement de l'extrémité libre avant du premier piston du premier vérin dans la gorge circulaire du plateau,
- les pistons axiaux de l'organe hydraulique sont répartis autour de l'axe de l'arbre suivant un diamètre inférieur à celui selon lequel sont répartis les deux vérins doubles.

D'une façon conventionnelle, les éléments tournants d'une telle transmission, c'est à dire notamment l'arbre d'entrée de la transmission, l'arbre de sortie de la transmission, les premier et second trains épicycloïdaux et le pont sont agencés à l'intérieur d'un carter d'huile formant réservoir au sein duquel leur lubrification est assurée par barbotage. Une pompe à huile mécanique, entraînée par un des éléments tournants, de préférence l'arbre d'entrée de la transmission, puise l'huile dans le carter d'huile et la pompe au droit des éléments tournants, d'où elle est évacuée naturellement par gravité avant de retomber au fond du carter d'huile.

Or, on a constaté que cette conception présentait de piètres performances en terme de rendement. En effet, la pompe à huile est entraînée par l'arbre d'entrée de la transmission et pour des régimes de rotation élevés du moteur du véhicule, fonctionne à ce titre à un régime bien supérieur au régime nécessaire à l'obtention d'une lubrification suffisante.

Ainsi, pour les régimes de rotation élevés du moteur thermique, la pompe à huile d'alimentation consomme une partie de la puissance motrice en pure perte.

Par ailleurs, le fonctionnement à régime élevé de la pompe à huile d'alimentation se traduit par un niveau sonore élevé de celle-ci, ce qui nuit au confort des passagers du véhicule.

Par ailleurs, la lubrification par barbotage des éléments tournants impose de disposer d'un carter de transmission destiné à former réservoir d'huile et qui est ainsi particulièrement encombrant.

De plus, dans cette conception, l'huile étant diffusée largement sur les éléments tournants par aspersion, le pompage de l'huile requiert une pompe à huile d'alimentation de puissance élevée, à la fois encombrante, bruyante et consommatrice d'une fraction non négligeable de la puissance du moteur thermique.

Pour remédier à ces inconvénients, l'invention propose une transmission du type décrit précédemment pour laquelle la pompe à huile d'alimentation n'est pas entraînée par l'arbre d'entrée de la transmission.

Dans ce but, l'invention propose une transmission du type décrit précédemment, caractérisée en ce qu'elle comporte des moyens de lubrification, d'au moins ses arbres d'entrée et de sortie, du pont, et de ses premier et second trains épicycloïdaux, comportant au moins une pompe à huile à entraînement électrique.

Selon d'autres caractéristiques de l'invention:
- les moyens de lubrification comportent un carter sec de la transmission qui loge au moins les arbres d'entrée et de sortie de la transmission, ses premier et second trains épicycloïdaux, et le pont ;
- le carter sec est alimenté en huile, dans sa partie supérieure, par une pompe à huile électrique d'alimentation et il est vidangé, dans sa partie inférieure, par au moins une pompe à huile électrique d'évacuation ;
- la pompe à huile électrique d'alimentation puise l'huile dans un réservoir qui est séparé du carter et la débite localement au droit des arbres d'entrée et de sortie, des premier et second trains épicycloïdaux, et du pont ;
- au moins les arbres d'entrée, de sortie, les premier et second trains épicycloïdaux, et le pont sont entourés par au moins un déflecteur qui comporte des moyens d'arrivée d'huile au droit des arbres d'entrée, de sortie, des premier et second trains épicycloïdaux, et du pont, et qui comporte de moyens pour canaliser de l'huile vers la partie inférieure du carter sec pour son évacuation ;
- la pompe à huile électrique d'évacuation vidange l'huile de la partie inférieure du carter sec pour la refouler dans le réservoir en passant à travers un échangeur thermique pour assurer son refroidissement ;
- la pompe à huile d'alimentation et la pompe à huile d'évacuation sont entraînées par un moteur électrique commun ;
- la transmission comporte des moyens pour limiter la pression d'alimentation de la pompe d'alimentation ;
- la transmission comporte des moyens de préchauffage de l'huile de lubrification avant le démarrage du véhicule.

D'autres caractéristiques et avantages de l'invention apparaîtront à la lecture de la description détaillée qui suit pour la compréhension de laquelle on se reportera aux dessins annexés dans lesquels:
- la figure 1 est une vue schématique d'une transmission à dérivation de puissance selon l'invention dont le premier frein est activé ; et
- la figure 2 est une vue selon la figure 1 de la transmission à dérivation de puissance selon l'invention dont le second frein est activé.
- la figure 3 est une vue en coupe axiale à plans rabattus d'un organe hydraulique selon l'invention illustrant le plateau en position de repos ;
- la figure 4 est une vue selon la figure 3 illustrant le plateau en position inclinée ;
- la figure 5 est une vue en coupe de l'organe hydraulique par la ligne 4-4 de la figure 3.
- la figure 6 met en évidence les moyens de lubrification proposées par l'invention, et
- la figure 7 est une vue schématique de ces moyens de lubrification.

Dans la description qui va suivre, des chiffres de référence identiques désignent des pièces identiques ou ayant des fonctions similaires.

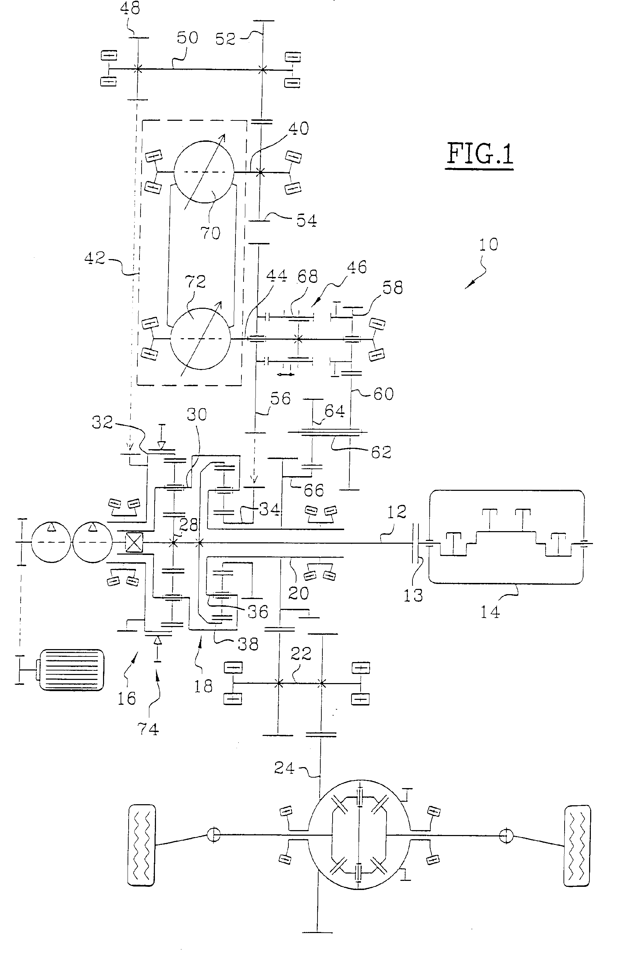

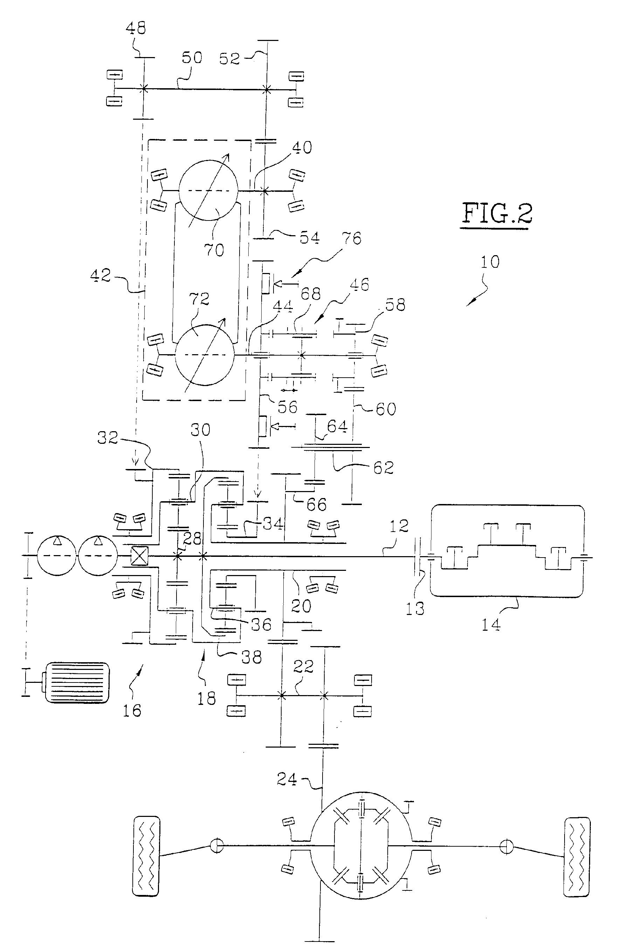

On a représenté aux figures 1 et 2 l'ensemble d'une transmission 10 à dérivation de puissance réalisée conformément à l'invention.

De manière connue, la transmission 10 à dérivation de puissance comporte un arbre d'entrée 12 qui est accouplé, par exemple par l'intermédiaire d'un embrayage 13, à un moteur 14 du véhicule, un premier train 16 épicycloïdal et un deuxième train 18 épicycloïdal, et un arbre 20 de sortie qui est accouplé, notamment par l'intermédiaire d'un arbre 22 de descente de pont, à un pont 24 pour entraîner au moins une roue 26 du véhicule.

Le premier train 16 épicycloïdal et le second train 18 épicycloïdal comportent respectivement des premiers éléments dont un premier planétaire 28, un premier porte-satellites 30, et une première couronne 32, et des seconds éléments dont un second planétaire 34, un second porte-satellites 36, et une seconde couronne 38.

De manière connue, certains des premiers éléments du premier train 16 épicycloïdal et des seconds éléments du second train 18 épicycloïdal sont liés en permanence les uns aux autres, à l'arbre d'entrée 12 de la transmission 10, à l'arbre 20 de sortie de la transmission 10, et à un premier arbre 40 d'un convertisseur 42 hydrostatique pour faire varier la raison du premier train 16 épicycloïdal, et certains des seconds éléments du second train 18 épicycloïdal sont liés sélectivement un second arbre 44 du convertisseur 42 hydrostatique pour faire varier la raison du second train 18 épicycloïdal par crabotage avec l'un ou l'autre de deux des seconds éléments du second train 18 épicycloïdal.

En particulier, dans le mode de réalisation préféré de l'invention, et de façon non limitative de celle-ci, le premier planétaire 28 et la seconde couronne 38 sont liés l'un à l'autre et sont liés à l'arbre d'entrée 12 de la transmission 10, les premiers 30 et second 36 porte-satellites sont liés l'un à l'autre et sont liés à l'arbre 20 de sortie de la transmission 10, et la première couronne 32 est liée au premier arbre 40 du convertisseur 42 hydrostatique.

Par ailleurs, des moyens 46 de crabotage permettent sélectivement de lier les premiers 30 et second 34 porte-satellites au second arbre 44 du convertisseur 42 hydrostatique ou bien de lier le second planétaire 34 au second arbre 44 du convertisseur 42 hydrostatique.

La première couronne 32 du premier train 16 épicycloïdal engrène avec un pignon amont 48 agencé à l'extrémité d'un arbre 50 intermédiaire primaire dont l'autre extrémité porte un pignon aval 52 qui engrène avec un pignon 54 porté par le premier arbre 40 du convertisseur 42 hydrostatique.

D'une façon analogue, un pignon fou 56, qui engrène directement avec le second planétaire 34 du second train 18 épicycloïdal, et un pignon fou 58, qui engrène avec un pignon amont 60 agencé à l'extrémité d'un arbre 62 intermédiaire secondaire dont l'autre extrémité porte un pignon aval 64 qui engrène avec un pignon 66 porté par l'arbre 20 de sortie, sont susceptibles d'être crabotés sélectivement par les moyens de crabotage 46 sur le second arbre 44 du convertisseur 42 hydrostatique pour lier sélectivement en rotation le second arbre 44 du convertisseur 42 hydrostatique au second planétaire 34 ou bien à l'arbre de sortie 20.

A cet effet, les moyens de crabotage 46 sont notamment constitués d'un crabot double 68 susceptible de craboter soit le pignon fou 56 soit le pignon fou 58 suivant deux positions extrêmes et opposées.

De manière connue, le convertisseur 42 hydrostatique est composé d'un premier organe hydraulique 70 et d'un second organe hydraulique 72, qui sont associés respectivement aux premier arbre 40 et au second arbre 44 du convertisseur, qui sont reliés hydrauliquement l'un à l'autre, et dont chacun est susceptible de fonctionner en pompe ou bien en moteur hydraulique avec une cylindrée variable commandée, pour transmettre un mouvement de rotation, de couple et de vitesse de valeurs déterminées, de l'un des premier 70 et second 72 organes hydrauliques à l'autre des organes hydrauliques 70, 72 selon des couple et vitesse de valeurs régulées. A cet effet, le premier organe hydraulique 70 et le second organe hydraulique 72 sont tous deux contrôlés par des moyens de commande (non représentés).

Dans cette configuration, les moyens de commande de la transmission 10 sont susceptibles d'établir deux modes de fonctionnement.

Dans ces deux modes de fonctionnement, une fraction de la puissance motrice est prélevée par le premier organe hydraulique 70, qui fonctionne alors en pompe hydraulique, sur le premier train épicycloïdal 16 et est transformée en puissance hydraulique. Cette puissance hydraulique est transmise au deuxième organe hydraulique 72 qui la restitue au second train épicycloïdal 72. Les moyens de commande permettent de contrôler les valeurs de régime et de couple des premier 70 et second 72 organes hydrauliques en régulant les cylindrées de ceux-ci.

De manière connue, chacun des premier organe hydraulique 70 et second organe hydraulique 72 sont des moteurs-pompes qui comportent chacun un arbre associé 40 et 44 dont est solidaire un plateau inclinable de façon commandée sur lequel sont en appui des pistons axiaux, rappelés élastiquement à l'encontre du plateau, et qui coulissent dans une chambre suivant une course qui est déterminée par l'inclinaison du plateau, la variation de la course des pistons dans leurs chambre déterminant la cylindrée variable de chaque moteur-pompe.

La détail de la structure de tels moteurs-pompes étant notoirement connue de l'état de la technique, celle-ci ne fera pas l'objet d'une description plus approfondie.

Dans cette configuration, les moyens de commande de la transmission 10 sont tout d'abord susceptibles d'établir un mode de fonctionnement dit "à sortie couplée", dans lequel le crabot double 68 lie en rotation l'arbre 44 du convertisseur 42 hydrostatique à l'arbre 20 de sortie. Ce mode de fonctionnement est notamment utilisé pour le démarrage du véhicule et pour son fonctionnement à vitesse réduite.

Au démarrage, le couple de sortie est fourni à l'arbre 20 de sortie seulement par le second organe hydraulique 72 qui est alimenté par le premier organe hydraulique 70 et fonctionne à pleine cylindrée. Puis la vitesse de rotation de l'arbre 20 de sortie s'accroît progressivement par augmentation de la cylindrée du premier organe hydraulique 70 jusqu'à une vitesse de rotation maximale. Simultanément, le couple de sortie, qui résulte de l'addition du couple fourni à l'arbre 20 de sortie par le second organe hydraulique 72 et du couple cheminant dans les deux trains épicycloïdaux 16 et 18, s'accroît progressivement jusqu'à une valeur maximale qui est obtenue lorsque les premier 70 et second 72 organes hydrauliques fonctionnent tous deux à pleine cylindrée.

La vitesse de rotation vitesse de rotation de l'arbre 20 peut alors encore être augmentée par réduction de la cylindrée du second organe hydraulique 72.

La cylindrée du second organe hydraulique 72 allant décroissant, la transmission parvient à un point de fonctionnement pour lequel la cylindrée du second organe hydraulique 72 est nulle et pour lequel la vitesse du premier organe hydraulique 70 est nulle

Ce point de fonctionnement, dit d'adaptation, du convertisseur 42 hydrostatique pour lequel le premier organe 70 est à vitesse nulle, permet de bloquer la première couronne 32, et le second organe 72 hydraulique, qui est à cylindrée nulle, tourne donc à vide et à couple nul.

Au delà de ce point d'adaptation, pour des vitesses de rotation élevées de l'arbre 20 de sortie, les moyens de commande de la transmission 10 sont susceptibles d'établir un mode de fonctionnement dit "à deux points d'adaptation", dans lequel le crabot double 68 lie en rotation le second arbre 44 du convertisseur 42 hydrostatique au second planétaire 34.

Ce mode de fonctionnement à deux points d'adaptation permet d'établir au moins deux points de fonctionnement, dits d'adaptation, pour lesquels un des organes hydrauliques 70 ou 72 est à vitesse nulle pour bloquer la première couronne 32 ou bien le second planétaire 34 et pour lequel l'autre organe hydraulique 70 ou 72 est à cylindrée nulle, et tourne donc à vide et à couple nul.

Le premier point d'adaptation correspond au blocage de la première couronne 32 par le premier organe hydraulique 70 tandis le second organe 72 hydraulique, qui est à cylindrée nulle, tourne donc à vide et à couple nul.

Ce premier point d'adaptation permet notamment le passage du mode fonctionnement dit "à sortie couplée" au mode de fonctionnement dit "à deux points d'adaptation", le crabot double 68 passant de la position dans laquelle il lie en rotation l'arbre 44 du convertisseur 42 hydrostatique à l'arbre 20 de sortie à celle dans laquelle il lie en rotation le second arbre 44 du convertisseur 42 hydrostatique au second planétaire 34.

En partant de ce premier point d'adaptation, l'augmentation de la vitesse de rotation de l'arbre 20 de sortie est obtenue en réduisant la cylindrée du premier organe hydraulique 70 et en augmentant celle du second organe hydraulique 72. Le second organe hydraulique 72 fonctionne alors en pompe hydraulique pour alimenter le premier organe hydraulique 70 qui fonctionne en moteur.

La transmission 10 parvient alors à un deuxième point d'adaptation pour lequel le second organe hydraulique 72 est à pleine cylindrée et à vitesse nulle pour bloquer le second planétaire 34 du second train épicycloïdal 18 tandis que le premier organe hydraulique 70 est à cylindrée nulle et tourne donc à vide à couple nul.

L'inconvénient de la transmission 10 est que, dans chacun des points d'adaptation précédemment évoqués, le blocage d'un des éléments des trains épicycloïdaux 16 ou 18 par un des organes hydrauliques 70 ou 72 consomme une partie de l'énergie hydraulique qui chemine dans le convertisseur 42 hydrostatique, notamment sous forme de pertes fluides et de frottements.

Ces pertes fluides et ces frottements altèrent le rendement global de la transmission 10.

Pour remédier à cet inconvénient, l'invention propose une transmission 10 du type décrit précédemment, qui comporte des moyens mécaniques indépendants de blocage des premier 40 arbre et second arbre 44 du convertisseur 42 hydrostatique pour éviter les pertes d'énergie hydraulique dans ledit convertisseur 42 hydrostatique.

A cet effet, la transmission 10 comporte un premier frein 74 qui agit sur la première couronne 32 et un second frein 76 qui agit sur l'arbre 44 de sortie du convertisseur 42 hydrostatique, et plus particulièrement sur le pignon fou 56 qui est porté par l'arbre 44 de sortie du convertisseur 42.

Le premier frein 74, qui est représenté à la figure 1 et second frein 76, qui est représenté à la figure 2, sont commandés tous deux par les moyens de commande. En particulier, les moyens de commande activent le premier frein 74,dans le mode de fonctionnement à sortie couplée ou dans le mode de fonctionnement à deux points d'adaptation, lorsque le convertisseur 42 hydrostatique est au premier point d'adaptation pour lequel le premier organe hydraulique 70 est à vitesse nulle, et les moyens de commande activent le second frein 76, dans le mode de fonctionnement à deux points d'adaptation, lorsque le convertisseur 42 hydrostatique est au deuxième point d'adaptation pour lequel le second organe hydraulique 72 est à vitesse nulle.

De la sorte, l'arbre 40 du premier organe hydraulique 70 et l'arbre 44 du second organe hydraulique 72 pouvant être respectivement bloqués par le premier frein 74 et par le second frein 76, toute perte hydraulique d'énergie est éliminée dans le convertisseur 42 hydrostatique.

Tous les moyens de réalisation connus peuvent être utilisés pour la réalisation des premier frein 74 et second frein 76. Toutefois, dans le mode de réalisation préféré de l'invention, le premier frein 74 est de préférence un frein à bande et le second frein 76 est de préférence un frein à disque.

L'invention permet donc avantageusement de bénéficier d'une transmission 10 à dérivation de puissance d'un excellent rendement.

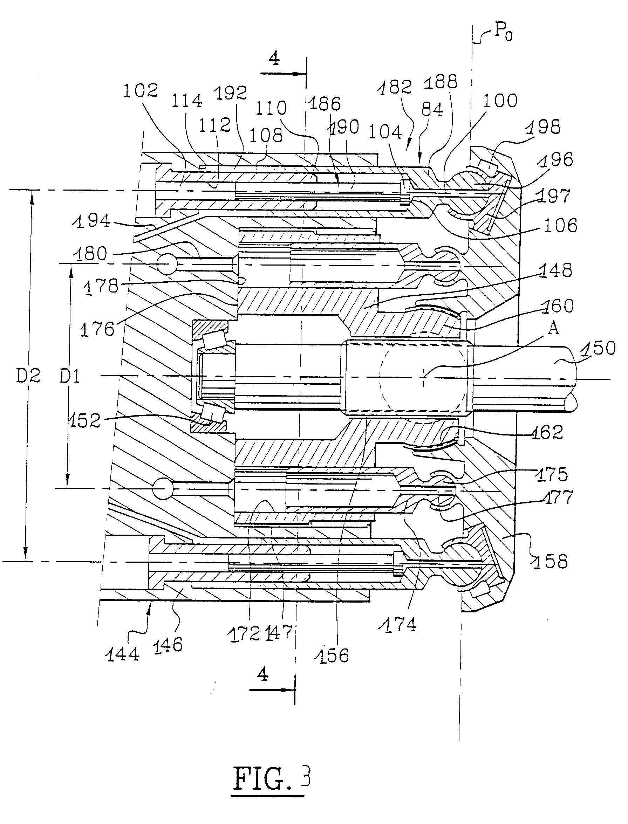

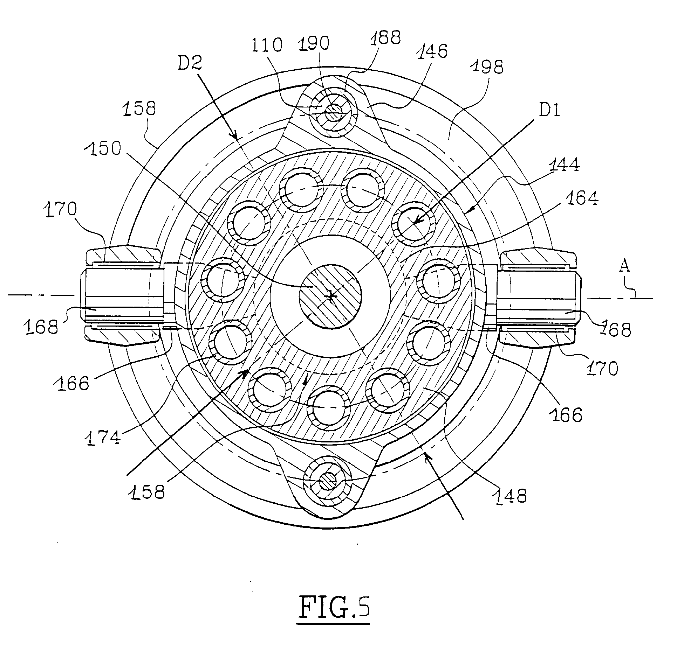

On a représenté sur les figures 3 à 5 un carter 144 d'un organe 30 formant moteur-pompe pour une transmission 10 selon l'invention. Le carter 144 reçoit un corps extérieur 146 fixe, qui peut notamment être venu de matière avec le carter 144 comme illustré plus particulièrement à la figure 5.

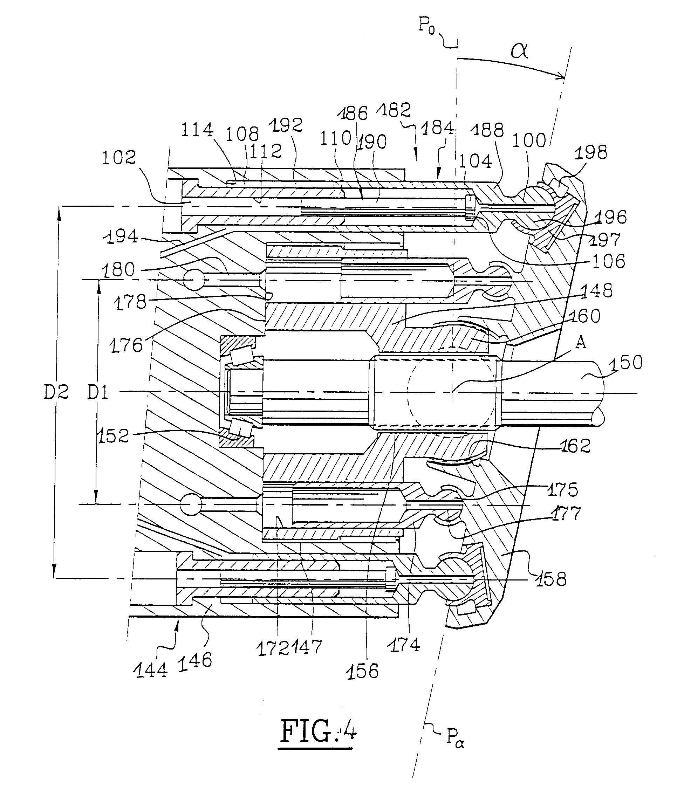

Comme illustré aux figures 3 et 4, un alésage 147, agencé à l'intérieur du corps 146 extérieur, reçoit un corps intérieur 148 qui est donc monté à rotation par rapport au carter 144. Un arbre 150 d'entrée/sortie est monté à rotation dans le corps extérieur 146 et porte notamment le corps intérieur 148.

En particulier, l'arbre 150 d'entrée/sortie de l'organe 130 est monté à rotation dans le corps extérieur 146 par l'intermédiaire d'un palier 152. L'autre extrémité de l'arbre 150 est portée par un palier 154 de la transmission 10, qui est représenté à la figure 1 ou 2.

L'arbre 150 d'entrée/sortie entraîne en rotation le corps intérieur 148 par l'intermédiaire de cannelures 156, lequel corps intérieur 148 entraîne en rotation un plateau inclinable 58 sensiblement en forme de disque.

Cette disposition n'est pas limitative de l'invention, et celle-ci trouve notamment à s'appliquer dans le cas où le plateau 158 est entraîné en rotation par l'arbre 150 et où le corps intérieur 148 est fixe.

Avantageusement, la liaison du plateau 158 au corps intérieur 148 est une liaison du type à joint homocinétique, qui permet à la fois l'entraînement du plateau 158 par l'arbre 150 et son inclinaison par rapport à celui-ci. Tout moyen connu de réalisation de cette liaison peut être utilisé pour la réalisation de l'invention, toutefois celle-ci à été représentée aux figures 3 et 4 sous la forme d'une rotule 160 comportant des cannelures 62 interposées entre le corps intérieur 148 et le plateau 158.

Comme l'illustre plus particulièrement la figure 4, le plateau 158 est aussi monté à rotation par rapport au carter 144 autour d'un axe A qui est perpendiculaire à la direction axiale de l'arbre 150. En particulier, une collerette périphérique 164 du plateau est montée glissante entre deux patins 166 portés par des extrémités de deux arbres 168 qui sont montés à rotation suivant l'axe A, notamment par l'intermédiaire de paliers 170 agencés dans le carter 144 de part et d'autre du plateau 158.

De cette façon, le plateau 158 est susceptible d'être entraîné en rotation tout étant maintenu dans un plan dont l'inclinaison peut varier autour de l'axe transversal A. On a représenté à la fiaure 3 un plan P₀ du plateau 158 correspondant à une inclinaison nulle de celui-ci par rapport à sa position de repos, c'est-à-dire une inclinaison pour laquelle il est sensiblement perpendiculaire à l'arbre 150, et on a représenté à la figure 4 un plan Pα du plateau 158 correspondant à une inclinaison suivant un angle α de celui-ci par rapport à sa position de repos.

De manière connue, le corps intérieur 148 comporte des chambres axiales 172, sensiblement équidistantes radialement de l'arbre 150 et réparties angulairement de façon régulière autour de celui-ci. Chacune de ces chambres 172 reçoit en coulissement axial un piston 174 creux dont une tête d'extrémité 175 est conformée en rotule et est liée au plateau 158.

Avantageusement, chaque rotule est traversée par un conduit 177 de lubrification qui relie la tête 175 à la partie creuse du piston pour assurer la lubrification de la rotule. De cette façon, comme l'illustre la figure 4, le plateau 158 et le corps intérieur 148 étant tous deux liés en rotation, mais le plan Pα du plateau 158 restant d'inclinaison a constante par rapport au carter 144, la course des pistons 174 dans leur chambres 172 est directement fonction de l'inclinaison a du plateau 158.

De la sorte, si les pistons 174 sont alimentés en huile sous pression, l'organe 130 peut fonctionner en moteur, les pistons 174 provoquant la rotation du plateau 158 et par conséquent de l'arbre 150 et, réciproquement, si le plateau est entraîné en rotation par l'arbre 150, il provoque le pompage de l'huile contenue dans les chambres 172 des pistons 174.

Dans le mode de réalisation préféré de l'invention, et de manière non limitative de celle-ci, le corps intérieur 148 de l'organe 130 comporte onze chambres 172 qui sont réparties angulairement de façon régulière autour de l'arbre 150 suivant un premier diamètre D₁. Une face arrière 176 transversale du corps intérieur 148 glisse sur une face avant 178 transversale de l'alésage 147 qui comporte, en regard de chaque chambre 172 débouchant vers l'arrière, des lumières 180 pour l'alimentation en huile des chambres 172.

Conformément à l'invention, le plateau 158 est commandé en inclinaison autour de l'axe A par au moins deux vérins 182 doubles à simple effet suivant la direction axiale, qui sont diamétralement opposés, et qui sont portés par le corps extérieur 146 de l'organe hydraulique 130.

Comme l'illustrent les figures 3 à 5, les deux vérins 182 doubles sont agencés suivant un diamètre D₂ qui est supérieur au diamètre D₁ suivant lequel sont agencés les pistons 174.

En particulier, chaque vérin 182 double comporte un premier vérin 184 et un second vérin 186 coaxiaux concentriques dont le premier piston 188 et le second piston 190 respectifs sont mobiles axialement l'un par rapport à l'autre, le premier piston 188 agissant sur le plateau 158 et le second piston 190 agissant sur le premier piston 188.

Comme l'illustre plus particulièrement la figure 4, les vérins 182 doubles sont agencés chacun de part et d'autre de l'axe A d'articulation du plateau 158 de façon à commander son inclinaison suivant l'angle α.

Dans le mode de réalisation préféré de l'invention les deux vérins 182 sont agencés dans le plan Pα qui est perpendiculaire à l'axe A d'articulation du plateau 158, de façon à exercer un couple maximal autour de l'axe A pour la commande en rotation du plateau autour de l'axe A, mais cette disposition n'est pas limitative de l'invention. En effet, du moment que les vérins 182 doubles ne sont pas alignés suivant l'axe d'inclinaison du plateau 158, ils sont à même de commander l'inclinaison de celui-ci.

La valeur de l'inclinaison α du plateau est déterminée par un module de commande (non représenté) qui commande l'alimentation sélective des vérins 182 doubles, un seul vérin étant alimenté en huile sous pression à la fois, l'autre étant mis en communication avec un réservoir d'huile (non représenté) de la transmission 10.

Ainsi, pour obtenir une inclinaison α du plateau 158 autour de l'axe A suivant le sens horaire comme illustré par la flèche de la figure 4, le module commande la poussée du vérin 182 double situé dans la partie supérieure de la figure 4 tandis que le vérin 182 double situé dans la partie inférieure est inactif.

Un mouvement inverse d'articulation du plateau 158, pour le ramener dans sa position de repos et/ou pour l'incliner dans le sens opposé, serait obtenu en commandant la poussée du vérin 182 situé dans la partie inférieure de la figure 4 tandis que le vérin 182 situé dans la partie supérieure de la figure 4 serait inactif.

L'inclinaison suivant l'angle α est obtenue de façon précise grâce à la conception particulière du vérin 182 qui comporte les deux vérins 184 et 186.

En effet, le premier vérin 184 est susceptible d'être alimenté en huile sous pression en huile à la pression haute de refoulement de l'organe hydraulique 130, tandis que le second vérin 186 est susceptible d'être alimentée en huile à la pression basse d'alimentation de l'organe hydraulique 130.

Ainsi, le premier vérin 184, alimenté en huile sous haute pression, est susceptible de fournir un effort important qui permet de vaincre les efforts de réaction du plateau 158 (qui est soumis aux efforts que les pistons axiaux 174 exercent sur lui) en réalisant un positionnement axial approché du plateau 158 par rapport à l'inclinaison α requise. Le second vérin 186, alimenté en huile sous basse pression, permet d'ajuster le positionnement du plateau 158 suivant la valeur précise de l'angle α.

Dans le mode de réalisation préféré de l'invention, le premier vérin 184 comporte une première chambre 192 cylindrique annulaire arrière, qui est agencée dans un alésage interne 108 formé dans l'épaisseur du corps extérieur 146, qui est alimenté en huile sous haute pression par l'intermédiaire d'un orifice 194 latéral d'alimentation, et dans laquelle coulisse le premier piston 188 tubulaire dont l'extrémité 96 libre avant coopère avec le plateau 158.

Avantageusement, l'extrémité 196 libre avant du premier piston 188 est conformée suivant une forme de tête sphérique qui est reçue dans une gorge 198 circulaire du plateau et coulisse dans cette gorge circulaire 198 lorsque le plateau 158 est en rotation, avec interposition d'un patin 197.

La gorge 198 est alimentée en huile sous pression par l'intermédiaire d'un conduit d'alimentation 100 qui traverse l'extrémité 196 libre avant du piston 188 et qui met en communication la gorge 198 avec la première chambre 192 annulaire arrière, de façon à former, avec l'extrémité 196 du premier piston 188, un palier hydrodynamique qui réalise la liaison entre le premier vérin 184, fixe en rotation, et le plateau 158, mobile en rotation.

Le second vérin 186 comporte une seconde chambre 102 cylindrique arrière, qui est coaxiale à la première chambre 192 annulaire arrière, et dans laquelle coulisse le second piston 190 dont l'extrémité libre avant 104 coopère avec une face arrière interne 106 du premier piston 188.

En particulier, l'alésage interne 108 du corps extérieur 146 comporte, coaxialement à la première chambre 192 tubulaire arrière, une chemise 110 tubulaire fixe dont le trou 112 interne délimite radialement la seconde chambre 102 arrière. Le trou interne 112 débouche à l'arrière de la chemise 110 tubulaire fixe pour former l'orifice d'alimentation du second vérin 186.

De ce fait, la première chambre 192 tubulaire arrière est délimitée radialement entre la paroi de l'alésage interne 108 du corps extérieur et la paroi externe de la chemise 110 tubulaire. De plus, la première chambre 192 tubulaire arrière est aussi délimitée axialement par une cloison transversale arrière 114 de l'alésage interne 108.

Enfin, la face 106 arrière interne du premier piston 188 du premier vérin 186 est conformée suivant une portion de cône pour former une partie d'appui pour l'extrémité libre avant 104 tronconique complémentaire du second piston 190 du second vérin 188. Cette disposition permet notamment au second piston 190 de prendre appui sur le premier piston 188 pour assurer un positionnement précis du plateau suivant l'angle a tout en gardant une bonne coaxialité par rapport au premier piston 188.

L'originalité de l'organe hydraulique 130 selon l'invention réside donc tout particulièrement dans sa commande en inclinaison du plateau à l'aide des deux vérins 182 doubles à simple effet, qui sont particulièrement peu encombrants et permettent de réduire considérablement l'encombrement transversal de l'organe hydraulique 130. L'invention permet ainsi de bénéficier d'un organe 130 compact susceptible de prendre aisément place dans un transmission à dérivation de puissance logée dans le compartiment moteur d'un véhicule de tourisme léger disposant d'un espace restreint dévolu à l'implantation de ses organes mécaniques.

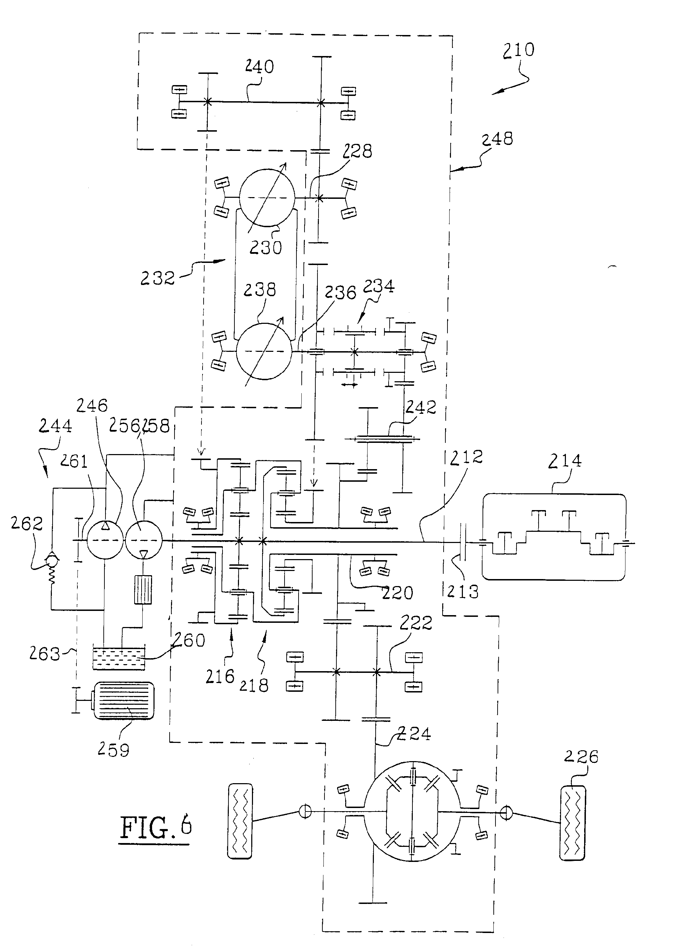

Conformément à la figure 6, la transmission 10 comporte des moyens 244 de lubrification de ses éléments, c'est à dire d'au moins ses arbres 212 d'entrée et 220 de sortie, du pont 224 et de ses premier train 216 épicycloïdal et second train 218 épicycloïdal, qui comportent au moins une pompe à huile à entraînement électrique.

Dans le mode de réalisation préféré de l'invention, les moyens 244 de lubrification sont destinés à assurer la lubrification de tous les éléments tournants 248 de la transmission, c'est à dire de ses arbres 212 d'entrée et 220 de sortie, de l'arbre intermédiaire 222 de descente de pont 224, des arbres intermédiaires primaire 240 et secondaire 242, et de ses premier train 216 épicycloïdal et second train 218 épicycloïdal.

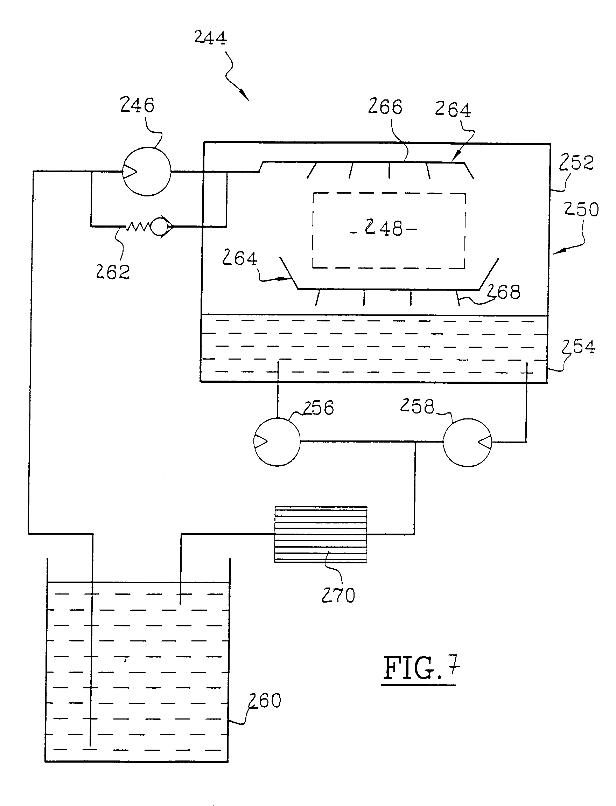

Comme l'illustre la figure 7, les éléments tournants 248 de la transmission 10 sont agencés à l'intérieur d'un carter sec 250 de la transmission. Le carter sec 250 est alimenté, dans sa partie supérieure 252 par une pompe à huile 246 électrique d'alimentation, et il est vidangé, dans sa partie inférieure 254, par au moins une pompe à huile électrique d'évacuation.

Dans le mode de réalisation préféré de l'invention, le carter sec 250 est vidangé par deux pompes électriques d'évacuation 256 et 258. En effet, l'huile contenue dans la transmission 10 est une huile conventionnellement visqueuse, par exemple d'un indice de viscosité de 80W90, et le carter sec 250 présente une surface relativement étendue. Il importe donc d'assurer une évacuation uniforme de l'huile de lubrification hors de la partie inférieure 254 de celui-ci.

Dans le mode de réalisation préféré de l'invention, la pompe à huile 246 d'alimentation et les pompes à huile d'évacuation 256 et 258 sont entraînées par un moteur électrique commun 259 représenté à la figure 6. Par exemple, les pompe 246, 256 et 258 comportent un arbre commun 261 qui est relié par un courroie 263 à un arbre 265 du moteur électrique 259.

Par ailleurs, la transmission 10 comporte un réservoir indépendant 260, séparé du carter sec 250, dans lequel la pompe 246 électrique d'alimentation puise l'huile. La pompe 246 électrique d'alimentation comporte des moyens pour limiter sa pression d'alimentation, notamment un clapet de décharge 262 qui est destiné à assurer un retour de l'huile en amont de la pompe lorsque la pression d'huile en aval de celle-ci est supérieure à une limite déterminée.

La pompe 246 électrique d'alimentation débite l'huile localement au droit des éléments tournants que sont ses arbres 212 d'entrée et 220 de sortie, l'arbre intermédiaire 222 de descente de pont 224, les arbres intermédiaires primaire 240 et secondaire 242, et les premier train 216 épicycloïdal et second train 218 épicycloïdal.

A cet effet, les arbres 212 d'entrée et 220 de sortie, l'arbre intermédiaire 222 de descente de pont 224, les arbres intermédiaires primaire 240 et secondaire 242, et les premier train 216 épicycloïdal et second train 218 épicycloïdal sont chacun entourés par un déflecteur 264, représenté schématiquement à la figure 7, qui comporte des moyens d'acheminement de l'huile, notamment des conduites d'acheminement 266 au droit de chacun des éléments tournants.

Ainsi, avantageusement, l'huile n'est dirigée que là où elle est nécessaire à la lubrification de la transmission 10.

Par ailleurs, les déflecteurs 264, comportent des moyens pour canaliser de l'huile, notamment des conduites d'évacuation 268 vers la partie inférieure du carter sec 250.

Ainsi, une fois son action lubrifiante réalisée, l'huile est immédiatement évacuée vers le réservoir 260 par les deux pompes 256 et 258 d'évacuation.

Enfin, un échangeur thermique 270 est interposé dans le circuit d'huile entre les pompes à huile 256 et 258 électriques d'évacuation et le réservoir 260 d'huile, de façon à assurer le refroidissement de l'huile et permettre ainsi d'accroître la longévité de son pouvoir lubrifiant en limitant sa dégradation à température élevée.

La transmission peut aussi, en variante, comporter de surcroît des moyens (non représentés) de préchauffage de l'huile de lubrification avant le démarrage du véhicule, de façon à lui garantir dès le démarrage une fluidité adéquate au bon fonctionnement de la transmission 10 et assurer ainsi une longévité accrue à celle-ci.

La transmission 10 comporte donc des moyens de lubrification efficaces ne prélevant pas de puissance motrice sur la transmission et présentant un bon rendement.

## Revendications

1. Transmission (10) à dérivation de puissance, notamment pour un véhicule automobile, du type qui comporte, d'amont en aval, un arbre d'entrée (12) qui est accouplé à un moteur (14) du véhicule, un premier (16) et un second (18) trains épicycloïdaux, et un arbre (20) de sortie qui est accouplé à un pont (24) pour entraîner au moins une roue (26) du véhicule, du type dans lequel des premiers et seconds éléments des premier et second trains épicycloïdaux, notamment des premier et second planétaires (28, 34), porte-satellites (30, 36) et couronnes (32, 38) sont liés en rotation les uns aux autres, à l'arbre d'entrée (12), à l'arbre de sortie (20), à un premier arbre (40) d'un convertisseur (42) hydrostatique commandé susceptible de faire varier la raison du premier train (16) épicycloïdal, et sont liés sélectivement à un second arbre (44) du convertisseur (42) hydrostatique susceptible de faire varier la raison du second train (18) épicycloïdal par crabotage avec l'un ou l'autre de deux des seconds éléments du second train (18) épicycloïdal,
caractérisée en ce qu'elle comporte des moyens mécaniques indépendants de blocage des premier (40) et second (44) arbres du convertisseur (42) hydrostatique pour éviter les pertes d'énergie hydraulique dans ledit convertisseur (42) hydrostatique.

2. Transmission (10) selon la revendication précédente, caractérisée en ce que le premier planétaire (28) et la seconde couronne (38) sont liés à l'arbre d'entrée (12), les premier (30) et second (36) porte-satellites sont liés à l'arbre (20) de sortie et sont susceptibles d'être liés en rotation au second arbre (44) du convertisseur hydrostatique (42), la première couronne (32) est liée au premier arbre (40) du convertisseur hydrostatique (42), et le second planétaire (34) est susceptible d'être lié en rotation au second arbre (44) du convertisseur (42) hydrostatique.

3. Transmission (10) selon la revendication précédente, caractérisée en ce que les moyens mécaniques indépendants de blocage comportent un premier frein (74) qui agit sur la première couronne (32) et un second frein (76) qui agit sur l'arbre (44) de sortie du convertisseur (42) hydrostatique.

4. Transmission (10) selon la revendication précédente, caractérisée en ce que le premier frein (74) est un frein à bande et en ce que le second frein (76) est un frein à disque.

5. Transmission (10) selon l'une quelconque des revendications 2 à 4, caractérisée en ce qu'elle comporte des moyens (68) de crabotage double qui permettent de lier sélectivement en rotation le second planétaire (34) au second arbre (44) du convertisseur (42) hydrostatique ou bien de lier l'arbre de sortie (20) au second arbre (44) du convertisseur (42) hydrostatique.

6. Transmission (10) selon l'une quelconque des revendications précédentes, caractérisée en ce que le convertisseur (42) hydrostatique comporte des premier (70) et second (72) organes hydrauliques, qui sont associés respectivement aux premier (40) et second (44) arbres du convertisseur (42), qui sont reliés hydrauliquement l'un à l'autre, dont chacun est susceptible de fonctionner en pompe ou bien en moteur hydraulique avec une cylindrée variable commandée, pour transmettre un mouvement de rotation, de couple et de vitesse de valeurs déterminées, de l'un des premier (70) et second (72) organes hydrauliques à l'autre des premier (70) et second (72) organes hydrauliques selon des couple et vitesse de valeurs régulées.

7. Transmission (10) selon la revendication précédente prise en combinaison avec la revendication 5, caractérisée en ce qu'elle comporte des moyens de commande qui sont susceptibles d'établir:
- un mode de fonctionnement dit à sortie couplée, dans lequel les moyens (68) de crabotage double lient en rotation l'arbre de sortie (20) au second arbre (44) du convertisseur (42) hydrostatique, et qui permet au moins un point de fonctionnement, dit d'adaptation, du convertisseur (42) hydrostatique pour lequel le premier organe (70) est à vitesse nulle pour bloquer la première couronne (32), et pour lequel le second organe (72) hydraulique est à cylindrée nulle, et
- un mode de fonctionnement dit à deux points d'adaptation, dans lequel les moyens (68) de crabotage double lient en rotation le second planétaire (36) au second arbre (44) du convertisseur (42) hydrostatique, et qui permet au moins deux points de fonctionnement, dits d'adaptation, pour lesquels un des organes hydrauliques (70, 72) est à vitesse nulle pour bloquer la première couronne (32) ou bien le second planétaire (34) et pour lequel l'autre organe hydraulique (70, 72) est à cylindrée nulle.

8. Transmission (10), selon la revendication précédente prise en combinaison avec l'une des revendications 3 ou 4, caractérisée en ce que les moyens de commande activent le premier frein (74), dans le mode de fonctionnement à sortie couplée ou dans le mode de fonctionnement à deux points d'adaptation, lorsque le convertisseur (42) hydrostatique est au point d'adaptation pour lequel le premier organe hydraulique (70) est à vitesse nulle, et en ce que les moyens de commande activent le second frein (76), dans le mode de fonctionnement à deux points d'adaptation, lorsque le convertisseur (42) hydrostatique est au point d'adaptation pour lequel le second organe hydraulique (72) est à vitesse nulle.

9. Transmission (10) selon l'une quelconque des revendications 6 à 8, caractérisée en ce que les premier (70) et second (72) organes hydrauliques du convertisseur hydrostatique (42) sont des moteurs-pompes qui comportent chacun un arbre (40, 44) dont est solidaire un plateau inclinable de façon commandée sur lequel sont en appui des pistons axiaux, rappelés élastiquement à l'encontre du plateau, et qui coulissent dans une chambre suivant une course qui est déterminée par l'inclinaison du plateau, la variation de la course des pistons dans leurs chambre déterminant la cylindrée variable de chaque moteur-pompe.

10. Organe hydraulique (130, 138), notamment d'un convertisseur hydrostatique (132), susceptible de fonctionner en moteur-pompe hydraulique et comportant un arbre (150) et un plateau (158) inclinable de façon commandée avec lequel des pistons (174) axiaux sont en contact de façon à provoquer, lors de la rotation de l'arbre (150), leur coulissement dans un corps intérieur (148) de l'organe (130, 138) suivant une course qui est déterminée par l'inclinaison (α) du plateau (158), la variation de la course des pistons (174) dans leurs chambres déterminant la cylindrée variable du moteur-pompe,
caractérisé en ce que le plateau (158) de l'organe (130, 138) hydraulique est commandé en inclinaison autour d'un axe (A) perpendiculaire à la direction axiale de l'arbre (150) de l'organe (130) hydraulique par au moins deux vérins (182) doubles, à simple effet, de direction axiale, qui sont diamétralement opposés et qui sont portés par un corps extérieur (146) de l'organe hydraulique (130, 138).

11. Organe hydraulique (130, 138) selon la revendication précédente, caractérisé en ce que chaque vérin (182) double comporte un premier (184) et un second (186) vérins coaxiaux concentriques dont les pistons (188, 190) sont mobiles l'un par rapport à l'autre avec un premier piston (188) qui agit sur le plateau (158) et un second piston (190) qui agit sur le premier piston (188).

12. Organe hydraulique (130, 138) selon la revendication précédente, caractérisé en ce que le premier vérin (184) comporte une première chambre (192) cylindrique annulaire arrière, qui est formée dans le corps (146) extérieur, dans laquelle coulisse le premier piston (188) tubulaire, dont l'extrémité (196) libre avant coopère avec le plateau (158).

13. Organe hydraulique (130, 138) selon la revendication précédente, caractérisé en ce que le second vérin (186) comporte une seconde chambre (102) cylindrique arrière qui est formée dans le corps extérieur (146), qui est coaxiale à la première chambre (192) arrière, et dans laquelle coulisse un second piston (190) dont l'extrémité libre avant coopère avec une face arrière (106) interne du premier piston (188).

14. Organe hydraulique (130, 138) selon la revendication précédente, caractérisé en ce que chacune des première (192) et seconde (102) chambres comporte un orifice associé (194, 112) d'alimentation.

15. Organe hydraulique (130, 138) selon l'une des revendications 13 ou 14, caractérisé en ce que le corps extérieur (146) comporte un alésage interne (108) dans lequel est monté, avec jeu radial, une chemise (110) tubulaire fixe dont le trou (112) interne délimite radialement la seconde chambre (102) arrière, et en ce que la première chambre (192) tubulaire arrière est délimitée radialement entre la paroi de l'alésage (108) interne du corps extérieur et la paroi externe de la chemise (110) tubulaire.

16. Organe hydraulique (130, 138) selon la revendication précédente, caractérisé en ce qu'une cloison (114) transversale de l'alésage (108) interne délimite axialement vers l'arrière la première chambre (192) arrière.

17. Organe hydraulique (130, 138) selon l'une des revendications 15 ou 16, caractérisé en ce que l'alésage interne (108) est formé dans l'épaisseur du corps (146) tubulaire extérieur.

18. Organe hydraulique (130, 138) selon l'une quelconque des revendications 14 à 17, caractérisé en ce que la première chambre (192) de pression est susceptible d'être alimentée en huile à la pression haute de refoulement de l'organe hydraulique (130) par l'intermédiaire de son orifice (194) d'alimentation d'huile associé, et en ce que la deuxième chambre (102) de pression est susceptible d'être alimentée en huile à la pression basse d'alimentation de l'organe hydraulique (130) par l'intermédiaire de son orifice (112) d'alimentation d'huile associé.

19. Organe hydraulique (130, 138) selon l'une quelconque des revendications 13 à 18, caractérisé en ce que la face arrière (106) interne du premier piston (188) du premier vérin (184) est conformée suivant une tronc de cône pour former une partie d'appui pour l'extrémité libre avant (104) tronconique complémentaire du second piston (190) du second vérin (186).

20. Organe hydraulique (130, 138) selon l'une des quelconque revendications 10 à 19, caractérisé en ce que le plateau (158) est articulé par rapport à l'arbre (150) de l'organe hydraulique par l'intermédiaire d'une rotule (160).

21. Organe hydraulique (130, 138) selon la revendication précédente, caractérisé en ce que le plateau (158) est de surcroît articulé en rotation par rapport à un carter (144) fixe de l'organe hydraulique (130) autour d'un axe (A) perpendiculaire au plan médian commun des deux vérins (182) doubles, notamment par l'intermédiaire de deux arbres (168) opposés dont une extrémité de chacun est liée en rotation au carter (144) et dont l'autre extrémité comporte des moyens (197) de guidage d'une collerette (164) périphérique du plateau (158).

22. Organe hydraulique (130, 138) selon l'une quelconque des revendications 10 à 21, caractérisé en ce que le corps extérieur (146) de l'organe hydraulique (130) est fixe par rapport au carter (144), l'extrémité libre (196) avant du premier piston (188) du vérin coulissant dans une gorge (198) circulaire du plateau (158), et en ce que le corps intérieur (48) de l'organe hydraulique (130) est lié en rotation à l'arbre (150) de l'organe hydraulique (130), des extrémités libres avant des pistons (174) axiaux étant liées au plateau (158) par des rotules.

23. Organe hydraulique (130, 138) selon la revendication précédente, caractérisé en ce qu'une tête sphérique de l'extrémité libre (196) avant du premier piston (188) du premier vérin (184) est reçue de manière étanche dans une gorge (198) circulaire du plateau (158) qui est alimentée en huile sous pression par un conduit (100) traversant la tête sphérique du premier piston (188) pour former un palier hydrodynamique permettant le glissement de l'extrémité libre (196) avant du premier piston (184) du premier vérin dans la gorge (198) circulaire du plateau (158).

24. Organe hydraulique (130, 138) selon l'une quelconque des revendications 10 à 23, caractérisé en ce que les pistons (174) axiaux de l'organe (130) hydraulique sont répartis autour de l'axe de l'arbre (150) suivant un diamètre (D₁) inférieur à celui (D₂) selon lequel sont répartis les deux vérins (182) doubles.

25. Transmission (210) à dérivation de puissance, notamment pour un véhicule automobile, du type qui comporte, d'amont en aval, des éléments tournants (248) dont un arbre d'entrée (212) qui est accouplé à un moteur (214) du véhicule, un premier (216) et un second (218) train épicycloïdal, et un arbre (220) de sortie qui est accouplé à un pont (224) pour entraîner au moins une roue (226) du véhicule, et du type qui comporte un convertisseur (232) hydrostatique dont un premier (228) et un deuxième arbre (236) sont liés en rotation chacun à au moins un des éléments (248), caractérisée en ce qu'elle comporte des moyens (244) de lubrification, d'au moins ses arbres d'entrée (212) et de sortie (220), du pont (224) et de ses premier (216) et second (218) trains épicycloïdaux, comportant au moins une pompe (246, 256, 258) à huile à entraînement électrique.

26. Transmission (10) selon la revendication précédente, caractérisée en ce que les moyens (244) de lubrification comportent un carter sec (250) de la transmission qui loge au moins les arbres (212) d'entrée et (220) de sortie de la transmission (210), ses premier (216) et second (218) trains épicycloïdaux, et le pont (224).

27. Transmission (10) selon la revendication précédente, caractérisée en ce que le carter sec (250) est alimenté en huile, dans sa partie supérieure (252), par une pompe (246) à huile électrique d'alimentation et en ce qu'il est vidangé, dans sa partie inférieure (254), par au moins une pompe à huile (256, 258) électrique d'évacuation.

28. Transmission (10) selon la revendication précédente, caractérisée en ce que la pompe à huile (246) électrique d'alimentation puise l'huile dans un réservoir (260) qui est séparé du carter (250) et la débite localement au droit des arbres (212) d'entrée et (220) de sortie, des premier (216) et second (218) trains épicycloïdaux, et du pont (224).

29. Transmission (10) selon la revendication précédente, caractérisée en ce qu'au moins les arbres (212) d'entrée, (220) de sortie, les premier (216) et second (218) trains épicycloïdaux, et le pont (224) sont entourés par au moins un déflecteur (264) qui comporte des moyens (266) d'arrivée d'huile au droit des arbres (212) d'entrée, (220) de sortie, des premier (216) et second (218) trains épicycloïdaux, et du pont (224), et qui comporte des moyens (268) pour canaliser de l'huile vers la partie inférieure (254) du carter sec (250) pour son évacuation.

30. Transmission (10) selon l'une des revendications 28 ou 29, caractérisée en que la pompe (256, 258) à huile électrique d'évacuation vidange l'huile de la partie inférieure (254) du carter sec (250) pour la refouler dans le réservoir (260) en passant à travers un échangeur (270) thermique pour assurer son refroidissement.

31. Transmission (10) selon l'une quelconque des revendications 25 à 30, caractérisée en ce que la pompe à huile (246) d'alimentation et la pompe (256, 258) à huile d'évacuation sont entraînées par un moteur (259) électrique commun.

32. Transmission (10) selon l'une quelconque des revendications 27 à 31, caractérisée en ce qu'elle comporte des moyens (262) pour limiter la pression d'alimentation de la pompe (246) d'alimentation.

33. Transmission (10) selon l'une quelconque des revendications 25 à 32, caractérisée en ce qu'elle comporte des moyens de préchauffage de l'huile de lubrification avant le démarrage du véhicule.
